# EUROPEAN PATENT SPECIFICATION

(11) **EP 1 877 309 B1**
(45) Date of publication and mention of the grant of the patent: **03.08.2011**
(21) Application number: 06743870.5
(22) Date of filing: 28.04.2006
(51) Int. Cl.: B64D 45/00

(54) **IMPROVEMENTS IN AIRCRAFT DOORS**
VERBESSERUNGEN AN FLUGZEUGTÜREN
AMÉLIORATION DE PORTIÈRES D'AVION

(30) Priority: 28.04.2005 GB 0508571
(43) Date of publication of application: 16.01.2008
(73) Proprietor: Penny & Giles Aerospace Limited, Christchurch Dorset BH23 3TH (GB)
(72) Inventor: Yardley, Christopher, Pulborough, West Sussex RH20 1EN (GB); Farmer, Michael John Charles, Crawley Down, West Sussex RH10 4UF (GB)
(74) Representative: Fountain, Sullivan
(86) International application number: PCT/GB2006/001554
(87) International publication number: WO 2006/114640

(56) References cited:
- US-A- 4 975 678
- PATENT ABSTRACTS OF JAPAN vol. 2003, no. 12, 5 December 2003 (2003-12-05) & JP 2003 262058 A (HONDA MOTOR CO LTD), 19 September 2003 (2003-09-19)

## Description

This invention relates to aircraft doors of the type typically used on passenger transport aircraft, in particular the invention relates to an alarm system for alerting cabin crew when opening of the door would be unsafe.

Doors of passenger transport aircraft are not to be opened unless it is safe to do so. One such time when opening the door would be unsafe is when the door is "armed" whereby opening the door activates the release of an emergency evacuation slide. In order to avoid accidents or injury at airports, aircraft doors are fitted with one or more visual indicators of the status of the door, for example a door might include a light which displays in one colour when the door is armed and a different colour when the door is unarmed. Alternatively, a door might include a slidable or rotatable handle which can be moved between a position marked "ARMED" and a position marked "DISARMED" and/or a slide placard which displays when the door is armed and is hidden when the door is not armed.

An alarm system activated by touch-sensitive door knob is disclosed in US 3,824,576. In this patent rotation of the door knob retracts a latch bolt thus causing an electrical connection between the knob and the bolt thereby triggering an alarm. The system also provides a procedure whereby authorised personnel can enter the premises and deactivate the alarm system before the alarm is activated either through a time-delay circuit or through a separate de-activation means outside the building.

Whilst known indicators for stopping a person opening an aircraft door are generally effective, the inventors have recognised that in some circumstances a person might not register the indicator prior to acting to open the door. For example, a visual indicator may become obscured by another body, or a cabin crew member may be distracted when approaching the door and forget to check its status. As different aircraft have doors with different visual indicators, it is also conceivable that a cabin crew member operating on an aircraft of a type they have not previously encountered may misinterpret a visual indicator assuming that it is safe to open the door when, in fact, it is not.

The applicant's earlier international application publication no. WO2005083647 A1 relates to an improved aircraft door that overcomes the aforementioned problems by providing an aural alarm which alerts a door operator to the fact that a door is armed. US 4975678 discloses an alarm system suitable for an aircraft door.

It has subsequently been envisaged that similar alarm systems are required for an aircraft door to prevent its opening when it is unsafe to do so, irrespective of whether the door has been armed.

On another occasion, for example, opening the door may be unsafe due to a pressure differential that still exists at that time between the interior and exterior of the aircraft. Although in most circumstances, aircraft doors ("plug-type" doors) are designed in such a way as to prevent them from being able to be opened if a substantial internal/external pressure differential exists, it is sometimes nevertheless possible for a door operator to open a door when a small pressure differential still exits. In such a case, once the door has been successfully unlatched, the pressure differential can violently force it open, possibly ejecting the operator from the aircraft and causing injury.

Many other circumstances may occur, once an airplane has landed or before take-off, which require the prevention of the door being opened for safety reasons.

It is an aim of the present invention to provide a novel aircraft door alarm system which alerts a door operator of the fact that it is unsafe to open a door as the operator attempts to open the door.

In accordance with a first aspect, the present invention provides an alarm system for an aircraft door comprising;
a sensor for sensing when the door operating handle is about to be gripped by an operator,
an aural alarm associated with the sensor and operable to sound when the sensor detects that the handle is about to be gripped,
means for receiving a signal activated in response to an event which occurs remote from the door; and
means for arming the sensor and/or aural alarm when the signal is received by the receiving means, wherein said event indicates a circumstance according to which opening of the aircraft door is unsafe, the means for arming the sensor and/or aural alarm: are automatic and the arming means is mechanically, electrically, optically or magnetically couplable to an existing means for arming an aircraft door or an existing visual indicator for indicating the status of the aircraft door.

The sensor may be a contactless type or alternatively may be a pressure sensor. As such, the term "about to be gripped" covers a situation where the sensor senses the hand of an operator prior to the handle being touched and a situation where the sensor senses pressure on the handle at the point where the handle is first touched.

The system may be incorporated into an operating handle for the door or may be retrofittable to an existing door handle. Most conveniently, the sensor may comprise a pressure sensor located on or in the handle which sensor responds to hand pressure of an operator gripping the handle. Alternatively a sensor could be light, heat, humidity or chemically sensitive responding to contact with a characteristic of an operators hand.

The aural alarm is desirably electrically operated. The sound made by the alarm may be one or more tones, optionally a repeating sequence of tones. Alternatively, the alarm may broadcast a pre-recorded voice message indicating that opening the door may be unsafe.

Preferably signal is generated by a sensing device. Preferably still the sensing device senses the presence of internal/external pressure differential. Alternatively, the signal may be generated by an automatic or manual switch located in, for example, the cockpit of the aircraft.

The alarm system may include its own power source, for example but not strictly limited to a dry cell. Alternatively, the alarm system may tap power from an existing power source used to power the door and/or aircraft.

Desirably, the alarm system includes its own indicator that it has been armed. Such an indicator may, for example, be a light emitting diode which lights or pulses when the system is armed.

The system may be completely hard wired or may use one or more wireless connections between various of its components and/or existing components of the aircraft door. For example, there may be a blue tooth link between the sensor and alarm or between the means for activating the sensor.

In another aspect, the invention comprises a handle for an aircraft door incorporating the previously described alarm system.

In yet another aspect, the invention comprises an aircraft door equipped with an alarm system as previously described.

For the purposes of illustration, one embodiment of the invention will now be further described with reference to the following Figures in which:
Figure 1 illustrates the front face of an aircraft door as is known in the prior art.
Figure 2 illustrates a handle for an aircraft door incorporating an embodiment of the alarm system of the invention.
Figure 3 illustrates a circuit diagram for an embodiment of an alarm system in accordance with the invention.

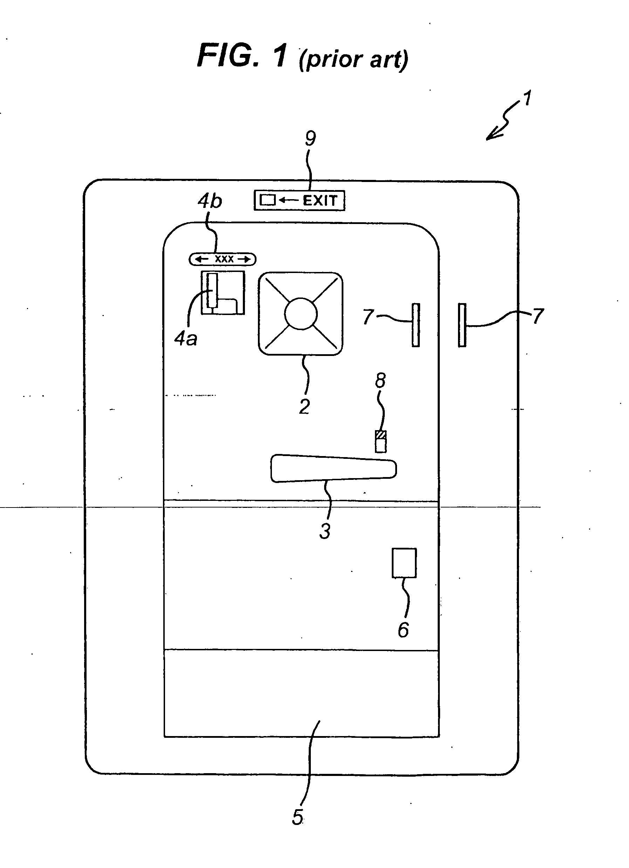

As can be seen from Figure 1 a typical aircraft door 1 (in this case a door used on a Boeing 757 aircraft) includes a viewing window 2, an operating handle 3 for opening and locking the door 1 and a door mode select panel 4a, 4b for arming and disarming the door 1. At the bottom of the door 1 is a bustle 5 in which an emergency evacuation slide (not shown) is stowed. A pair of handles 7 are provided towards the top and right of the door 1 which an operator can use to manoeuvre the door 1.

The door mode select panel 4a, 4b comprises an operating switch 4a and a position indicator 4b. The position indicator 4b illustrates the direction in which the switch 4a need be switched to respectively arm and disarm the door 1. Just above the operating handle 3 is a slide placard 8. When the door 1 is disarmed, the slide placard is retained in the body of the door 1, flush with the surface of the door 1. When the door 1 is armed by appropriate operation of the switch 4a, the slide placard is caused to pop out of the door and display an indicator that the door is armed. At the top of the door 1 is an LED 9 which is lit when the door 1 is armed and not lit when the door 1 is disarmed. Thus there are three visual indicators (LED 9, slide placard 8 and display panel 4a, 4b) showing status of the door 1 as armed or disarmed.

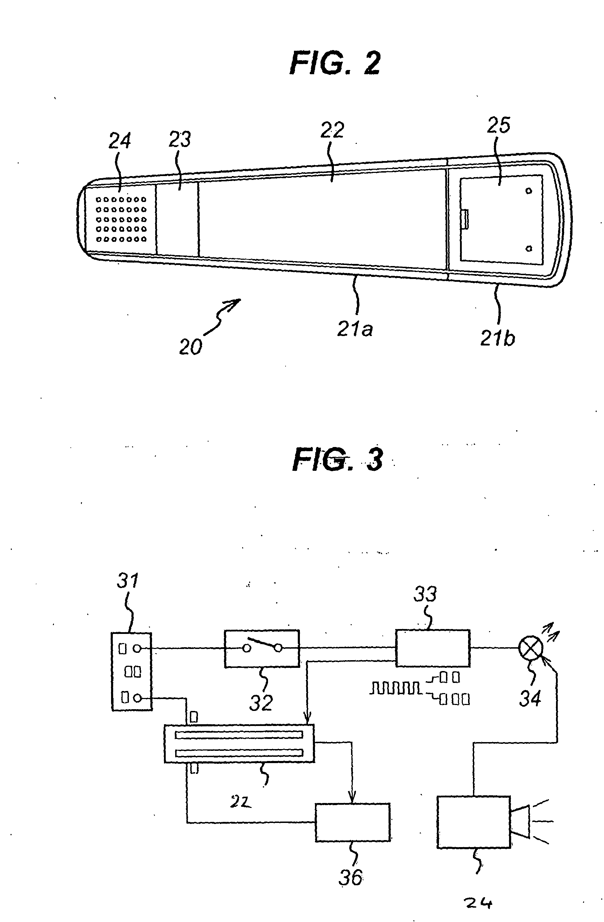

Figure 2 shows the reverse side of a door operating handle 20 similar to that referenced 3 in Figure 1. The handle has a substantially C shaped cross section made up of walls 21a, 21b and the front surface (not shown) of the handle 20. A taller walled section 21b is provided at one end of the handle to allow attachment to the front of a door whilst providing a clearance around the remainder of the handle 20 so that it may be gripped.

Enclosed within the C section is an alarm system in accordance with the invention. Extending across a central portion of the handle is a pressure sensitive pad 22 enclosing an electrical circuit supplying the alarm system. Adjacent the pressure sensitive pad is an arming device 23 which is responsive to a signal generated remotely from, for example a sensing device (not shown), and to which the handle 20 is attached to arm the alarm system.

The remotely generated signal indicates that opening of the aircraft door is unsafe.

The sensing device may, for example, sense a particular condition within the aircraft or between the interior and exterior of the aircraft. For example, the sensing device may comprise a pressure sensor capable of sensing the presence of a pressure differential between the interior and exterior of the aircraft and generating a signal accordingly to be received by the arming device. The sensing device may include more than one sensor if more than one sensor is required to sense a particular condition.

The arming device 23 may, alternatively be responsive to a signal generated from an automatic or manual switch that may, for example, be located in the cockpit of the aircraft.

Adjacent the arming device 23 is a speaker 24 of an alarm sounder. The system is powered by a battery pack enclosed in a container 25.

It will be appreciated that the components of the system as described in relation to Figure 2 could be re-ordered without affecting the mode of operation of the invention.

Figure 3 shows a circuit diagram for an alarm system substantially similar to the embodiment illustrated in Figure 2. The circuit comprises a 9v dry power cell 31 which powers the pressure sensor 22.

The system is armed through the arming device 23, the circuitry of which is shown in Figure 3. A signal received by the arming means 23 from the remote sensor causes a magnetically sensitive Reed switch 32 to be magnified. The change in the field is such as to cause the switch 32 to close. The alarm system circuit is now armed. Once the system is armed but not activated (i.e. there is no detection of pressure by sensor 22) a battery saver circuit 33 pulses a low current supply to LED 34 which emits an intermittent light, this provides a visual indicator that the system is armed and in a "stand by" mode.

When the pressure sensor 22 is subjected to pressure, for example when the door handle is gripped, a sub circuit including the pressure sensor 22 and LED 34 is closed and the LED becomes permanently lit, taking current directly from the dry cell 31 indicating the alarm has been activated.

Simultaneously, a latch circuit 36 is closed and the latch circuit 36 grabs power from the cell 31. The active latch circuit 36 triggers the broadcast of a timed, audible alarm, for example a pre-recorded voice message, through speaker/amplifier circuit 35.

Once the pressure sensor 22 is relieved of pressure, the supply conduits between the sensor 22 and each of the latch circuit 36 and LED 34 are closed, the alarm stops sounding and the LED reverts to blinking. Once a signal is not longer received by the arming device 23 the Reed switch 32 is de-magnetised causing the switch 32 to open. The alarm system is then disarmed and the door can be operated without setting off the aural alarm.

In an alternative embodiment (not shown) only the sensor is incorporated into an operating handle for the door. The electronic circuitry providing communication between the sensor and the arming means and aural alarm are located or are incorporated into the door structure.

In a further alternative embodiment (also not shown) the sensor is incorporated into, or located on, the door structure preferably just behind the handle. The sensor is close enough to the handle to sense when the handle is, or is about to be, touched by an operator.

It is to be understood that the forgoing is merely representative of one embodiment which the alarm system of the invention may take, other embodiments will no doubt occur to the skilled addressee without the need for inventive thought and without departing from the scope of the invention as claimed in the appended claims.

## Claims

1. An alarm system for an aircraft door comprising;
a sensor for sensing when the door operating handle is about to be gripped by an operator,
an aural alarm associated with the sensor and operable to sound when the sensor detects that the handle is about to be gripped,
means for receiving a signal activated in response to an event which occurs remote from the door and arming the sensor and/or aural alarm when the signal is received by the receiving means; **characterised in that** said event indicates a circumstance according to which opening of the aircraft door is unsafe, the means for arming the sensor and/or aural alarm are automatic and the arming means is mechanically, electrically, optically or magnetically couplable to an existing means for arming the aircraft door or an existing visual indicator for indicating the status of the aircraft door.

2. An alarm system as claimed in claim 1, wherein the aural alarm and the means for arming the sensor and/or activating the aural alarm are embodied in the aircraft door.

3. An alarm system as claimed in claim 1 or claim 2 wherein the sensor is incorporated in, or located on, the door operating handle.

4. An alarm system as claimed in claim 1 or claim 2, wherein the sensor is incorporated into, or otherwise located on, the aircraft door within the immediate vicinity of the door operating handle.

5. An alarm system as claimed in claim 1 which is embodied in a door operating handle for an aircraft door.

6. An alarm system as claimed in any one of claims 1 to 5 wherein the sensor comprises a pressure sensor.

7. An alarm system as claimed in any one of claims 1 to 5 wherein the sensor is a light sensor.

8. An alarm system as claimed in any preceding claim wherein the aural alarm is electrically operated.

9. An alarm system as claimed in claim 8 wherein the aural alarm sounds one or more tones.

10. An alarm system as claimed in claim 9 wherein the aural alarm sounds a repeating sequence of tones.

11. An alarm system as claimed in claim 8 wherein the alarm sounds a pre-recorded voice message in one or more languages.

12. An alarm system as claimed in claim 1 wherein the arming means includes a sensor which is activated following a change in the status of the door.

13. An alarm system as claimed in claim 12 wherein the arming means sensor is a light sensor obscurable by an operating switch or handle for arming the door when the position of the switch or handle is changed.

14. An alarm system as claimed in claim 12 wherein the arming means includes a magnetically sensitive switch which is responsive to a magnetic field which changes when an aircraft door to which it is attachable is switched between an armed and an unarmed configuration.

15. An alarm system as claimed in claim 14 wherein the changing magnetic field is associated with a slide placard of an aircraft door to which the alarm system is attachable.

16. An alarm system as claimed in any preceding claim including its own power source.

17. An alarm system as claimed in claim 16 wherein the power source is a dry cell.

18. An alarm system as claimed in any of claims 1 to 15 wherein the alarm system is configured to tap power from an existing power supply of an aircraft door or aircraft to which it is attachable.

19. An alarm system as claimed in any of the preceding claims wherein the alarm system includes its own indicator that the system has been armed.

20. An alarm system as claimed in claim 19 wherein the arming system indicator is a light emitting diode which lights or pulses when the system is armed and ceases when the system is not armed.

21. An alarm system as claimed in any preceding claim wherein the system is hard wired.

22. An alarm system as claimed in any of claims 1 to 20 wherein the system includes one or more wireless connections between various of its components and/or existing components of an aircraft door to which it may be attached.

23. An alarm system as claimed in claim 22 wherein a blue tooth link is provided between the sensor and alarm or between the means for arming the sensor and the sensor.

24. An operating handle for an aircraft door incorporating the alarm system of any preceding claim.

25. An operating handle as claimed in claim 24 wherein the handle is substantially C shaped in cross section and one or more of the components of the alarm system are mounted in the C of the C shaped cross section.

26. An aircraft door incorporating an operating handle as claimed in claim 24 or claim 25.

## Patentansprüche

1. Alarmsystem für eine Flugzeugtür, das Folgendes umfasst:
einen Sensor zum Erkennen, wenn der Türbedienungsgriff unmittelbar davor steht, von einem Bediener ergriffen zu werden,
einen akustischen Alarm, der mit dem Sensor assoziiert ist, und der ertönt, wenn der Sensor erkennt, dass ein Ergreifen des Griffs unmittelbar bevorsteht,
Mittel zum Empfangen eines Signals, das als Reaktion auf ein Ereignis, das von der Tür entfernt auftritt, emittiert wird und zum Aktivieren des Sensors und/oder des akustischen Alarms, wenn das Signal von den Empfangsmitteln empfangen wird;
**dadurch gekennzeichnet, dass** das genannte Ereignis einen Umstand anzeigt, gemäß dem das Öffnen der Flugzeugtür gefährlich ist, die Mittel zum Aktivieren des Sensors und/oder des akustischen Alarms automatisch sind und das Aktivierungsmittel mechanisch, elektrisch, optisch oder magnetisch mit einem existierenden Mittel zum Aktivieren der Flugzeugtür oder einer existierenden visuellen Anzeige zum Anzeigen des Status der Flugzeugtür gekoppelt werden kann.

2. Alarmsystem nach Anspruch 1, wobei der akustische Alarm und die Mittel zum Aktivieren des Sensors und/oder zum Aktivieren des akustischen Alarms in der Flugzeugtür integriert sind.

3. Alarmsystem nach Anspruch 1 oder Anspruch 2, wobei der Sensor in den Türbedienungsgriff integriert ist oder sich darauf befindet.

4. Alarmsystem nach Anspruch 1 oder Anspruch 2, wobei der Sensor in die Flugzeugtür in unmittelbarer Nähe des Türbedienungsgriffs integriert ist oder auf andere Weise daran angeordnet ist.

5. Alarmsystem nach Anspruch 1, das in einem Türbedienungsgriff für eine Flugzeugtür ausgestaltet ist.

6. Alarmsystem nach einem der Ansprüche 1 bis 5, wobei der Sensor einen Drucksensor umfasst.

7. Alarmsystem nach einem der Ansprüche 1 bis 5, wobei der Sensor ein Lichtsensor ist.

8. Alarmsystem nach einem der vorherigen Ansprüche, wobei der akustische Alarm elektrisch betätigt wird.

9. Alarmsystem nach Anspruch 8, wobei der akustische Alarm einen oder mehrere Töne aussendet.

10. Alarmsystem nach Anspruch 9, wobei der akustische Alarm eine sich wiederholende Folge von Tönen ausgibt.

11. Alarmsystem nach Anspruch 8, wobei der Alarm eine zuvor aufgezeichnete gesprochene Nachricht in einer oder mehreren Sprachen ausgibt.

12. Alarmsystem nach Anspruch 1, wobei das Aktivierungsmittel einen Sensor beinhaltet, der nach einer Änderung des Status der Tür aktiviert wird.

13. Alarmsystem nach Anspruch 12, wobei der Aktivierungsmittelsensor ein Lichtsensor ist, der von einem Bedienungsschalter oder Griff zum Aktivieren der Tür verdeckt werden kann, wenn die Position des Schalters oder des Griffs geändert wird.

14. Alarmsystem nach Anspruch 12, wobei das Aktivierungsmittel einen magnetisch empfindlichen Schalter aufweist, der auf ein Magnetfeld anspricht, das sich ändert, wenn eine Flugzeugtür, an der es angebracht werden kann, zwischen einer aktivierten und einer nicht aktivierten Konfiguration geschaltet wird.

15. Alarmsystem nach Anspruch 14, wobei das sich ändernde Magnetfeld mit einem Gleitschild einer Flugzeugtür assoziiert ist, an der das Alarmsystem angebracht werden kann.

16. Alarmsystem nach einem der vorherigen Ansprüche, das seine eigene Stromquelle besitzt.

17. Alarmsystem nach Anspruch 16, wobei die Stromquelle eine Trockenzelle ist.

18. Alarmsystem nach einem der Ansprüche 1 bis 15, wobei das Alarmsystem so konfiguriert ist, dass es Strom von einer vorhandenen Stromversorgung einer/s Flugzeugtür oder Flugzeugs nimmt, an der/dem es angebracht werden kann.

19. Alarmsystem nach einem der vorherigen Ansprüche, wobei das Alarmsystem eine eigene Anzeige dafür aufweist, dass das System aktiviert wurde.

20. Alarmsystem nach Anspruch 19, wobei die Aktivierungssystemanzeige eine Leuchtdiode ist, die aufleuchtet oder blinkt, wenn das System aktiviert ist, und erlischt, wenn das System nicht aktiviert ist.

21. Alarmsystem nach einem der vorherigen Ansprüche, wobei das System festverdrahtet ist.

22. Alarmsystem nach einem der Ansprüche 1 bis 20, wobei das System eine oder mehrere drahtlose Verbindungen zwischen verschiedenen seiner Komponenten und/oder existierenden Komponenten einer Flugzeugtür aufweist, an der es angebracht werden kann.

23. Alarmsystem nach Anspruch 22, wobei eine Bluetooth-Verbindung zwischen dem Sensor und dem Alarm oder zwischen den Mitteln zum Aktivieren des Sensors und dem Sensor vorgesehen ist.

24. Bedienungsgriff für eine Flugzeugtür, der das Alarmsystem nach einem der vorherigen Ansprüche beinhaltet.

25. Bedienungsgriff nach Anspruch 24, wobei der Griff einen im Wesentlichen C-förmigen Querschnitt hat und eine oder mehrere der Komponenten des Alarmsystems im C des C-förmigen Querschnitts montiert sind.

26. Flugzeugtür, die einen Bedienungsgriff nach Anspruch 24 oder Anspruch 25 aufweist.

## Revendications

1. Système d'alarme pour une portière d'avion comprenant :
un capteur pour détecter le moment auquel la poignée de manoeuvre de portière est sur le point d'être saisie par un opérateur,
une alarme sonore, associée au capteur, et apte à fonctionner pour déclencher un son lorsque le capteur détecte que la poignée est sur le point d'être saisie,
des moyens pour recevoir un signal lequel est activé en réaction à un événement qui survient loin de la portière et pour armer le capteur et/ou l'alarme sonore quand le signal est reçu par les moyens de réception ; **caractérisé en ce que** ledit événement indique une circonstance suivant laquelle l'ouverture de la portière d'avion présente un risque, les moyens pour armer le capteur et/ou l'alarme sonore sont automatiques et le moyen d'armement est apte à être couplé par voie mécanique, électrique, optique ou magnétique à un moyen existant pour armer la portière d'avion ou un indicateur visuel existant pour indiquer l'état de la portière d'avion.

2. Système d'alarme selon la revendication 1, l'alarme sonore et les moyens pour armer le capteur et/ou activer l'alarme sonore étant intégrés dans la portière d'avion.

3. Système d'alarme selon la revendication 1 ou la revendication 2, le capteur étant incorporé à la poignée de manoeuvre de portière, ou étant positionné sur cette poignée.

4. Système d'alarme selon la revendication 1 ou la revendication 2, le capteur étant incorporé à la portière d'avion, ou d'une autre façon positionné sur celle-ci, dans le voisinage immédiat de la poignée de manoeuvre de portière.

5. Système d'alarme selon la revendication 1, qui est intégré dans une poignée de manoeuvre de portière destinée à une portière d'avion.

6. Système d'alarme selon l'une quelconque des revendications 1 à 5, le capteur comportant un capteur de pression.

7. Système d'alarme selon l'une quelconque des revendications 1 à 5, le capteur étant un capteur de lumière.

8. Système d'alarme selon l'une quelconque des revendications précédentes, l'alarme sonore ayant un fonctionnement électrique.

9. Système d'alarme selon la revendication 8, l'alarme sonore faisant retentir une ou plusieurs tonalités.

10. Système d'alarme selon la revendication 9, l'alarme sonore faisant retentir une séquence de tonalités répétitive.

11. Système d'alarme selon la revendication 8, l'alarme produisant un message vocal pré-enregistré dans une ou plusieurs langues.

12. Système d'alarme selon la revendication 1, le moyen d'armement comportant un capteur qui est activé à la suite d'un changement dans l'état de la portière.

13. Système d'alarme selon la revendication 12, le capteur des moyens d'armement étant un capteur de lumière apte à être occulté par un interrupteur ou une poignée de manoeuvre afin d'armer la portière lorsque la position de l'interrupteur ou de la poignée subit un changement.

14. Système d'alarme selon la revendication 12, le moyen d'armement comportant un interrupteur magnétiquement sensible lequel réagit à un champ magnétique qui change lorsqu'une portière d'avion, sur laquelle il est apte à être fixé, est commuté entre une configuration armée et une configuration non armée.

15. Système d'alarme selon la revendication 14, le champ magnétique variable étant associé à un placard de toboggan d'une portière d'avion à laquelle le système d'alarme est apte à être fixé.

16. Système d'alarme selon l'une quelconque des revendications précédentes incluant sa propre source d'énergie.

17. Système d'alarme selon la revendication 16, la source d'énergie étant une pile sèche.

18. Système d'alarme selon l'une quelconque des revendications 1 à 15, le système d'alarme étant configuré de façon à soutirer de l'énergie à partir d'une alimentation d'énergie existante d'une portière d'avion ou d'un avion auquel il est apte à être fixé.

19. Système d'alarme selon l'une quelconque des revendications précédentes, le système d'alarme englobant son propre indicateur comme quoi le système a été armé.

20. Système d'alarme selon la revendication 19, l'indicateur du système d'armement étant une diode électroluminescente qui s'allume ou clignote lorsque le système est armé et cesse lorsque le système n'est pas armé.

21. Système d'alarme selon l'une quelconque des revendications précédentes, le système étant câblé.

22. Système d'alarme selon l'une quelconque des revendications 1 à 20, le système englobant une ou plusieurs connexions sans fil entre une diversité de ses composants et/ou des composants existants d'une portière d'avion à laquelle il peut être fixé.

23. Système d'alarme selon la revendication 22, une liaison Blue Tooth étant prévue entre le capteur et l'alarme ou entre les moyens pour armer le capteur et le capteur.

24. Poignée de manoeuvre pour une portière d'avion incorporant le système d'alarme selon l'une quelconque des revendications précédentes.

25. Poignée de manoeuvre selon la revendication 24, la poignée présentant une coupe sensiblement en forme de C, alors qu'un ou plusieurs composants du système d'alarme sont montés dans le C de la partie en coupe en forme de C.

26. Portière d'avion incorporant une poignée de manoeuvre selon l'énoncé de la revendication 24 ou de la revendication 25.
